# EUROPÄISCHE PATENTSCHRIFT

(11) **EP 2 722 532 B1**
(45) Veröffentlichungstag und Bekanntmachung des Hinweises auf die Patenterteilung: **31.05.2017**
(21) Anmeldenummer: 13179284.8
(22) Anmeldetag: 05.08.2013
(51) Int. Cl.: F16B 5/06, B60K 11/02, F01P 11/02

(54) **Anordnung eines Behälters an einer Haltestruktur sowie Verfahren zu deren Montage**
Assembly of a container on a support structure and method for assembling the same
Agencement d'un récipient sur une structure porteuse et procédé de montage associé

(30) Priorität: 18.10.2012 DE 102012020397
(43) Veröffentlichungstag der Anmeldung: 23.04.2014
(73) Patentinhaber: Volkswagen Aktiengesellschaft, 38440 Wolfsburg (DE)
(72) Erfinder: Wittig, Michael, 38102 Braunschweig (DE)

(56) Entgegenhaltungen:
- WO-A1-2004/090352
- WO-A1-2009/044079
- DD-A1- 215 285
- DE-A1- 19 953 786
- DE-C1- 19 637 995
- GB-A- 2 160 579

## Beschreibung

Die Erfindung betrifft eine Anordnung eines insbesondere als Ausgleichsbehälter für Kühlwasser dienenden Behälters an einer eine Ausnehmung aufweisenden Haltestruktur, wobei der Behälter in einer Montageposition mit zumindest einer Ausformung einen Randbereich der Ausnehmung durch eine translatorische Bewegung in Fügerichtung hinterschneidend positionierbar und mit zumindest einem Rastvorsprung in der Montageposition festgelegt ist, wobei die Ausformung und der Rastvorsprung einteilig verbunden sind.

Eine solche Anordnung wird beispielsweise in der WO 2009/044079 A1 offenbart, die bereits einen Behälter für Kühlwasser beschreibt, der an einer mehrere Ausnehmungen aufweisenden Haltestruktur angeordnet ist. Der Behälter ist in seiner Montageposition mit zumindest einer Ausformung einen Randbereich der Ausnehmung durch eine translatorische Bewegung in horizontaler Fügerichtung hinterschneidend positioniert. Jede Ausformung hat einen Rastvorsprung, der den Behälter festlegt, wobei die Ausformung und der Rastvorsprung einteilig verbunden sind. Diese Anordnung gestattet auch eine Demontage des Behälters.

In der DE 10 2007 020 928 A1 wird eine Anordnung beschrieben, die eine Halterung betrifft, mit der ein Modul eines Kraftfahrzeugs, beispielsweise ein Kühlmittelausgleichsbehälter, an einer Karosserie oder an einer anderen Komponente des Fahrzeugs befestigt werden kann. Um die in allen drei Raumrichtungen gesicherte Befestigung des Moduls ohne Schrauben zu realisieren, hat die Halterung einen Befestigungsabschnitt, mit dem das Modul am Kraftfahrzeug befestigbar ist, und einen hiervon abgewinkelten Auflageabschnitt, um darauf das Modul zu platzieren. Der beispielsweise horizontal angeordnete Auflageabschnitt besitzt eine Aufnahme, in die ein Zapfen des Moduls in vertikaler Richtung einführbar ist, wobei der Zapfen in eingeführtem Zustand in der Aufnahme in einer vorgegebenen Richtung längsverschiebbar ist. Der Befestigungsabschnitt besitzt zum einen eine Aufnahme, in die eine Lasche des Moduls bei dessen Bewegung in die besagte vorgegebene Richtung einfahren kann, und zum anderen einen Ausleger, der zum Eingehen einer formschlüssigen Verbindung mit einem dem Modul zugeordneten Sicherungsblock ausgebildet ist. Dabei erfolgt die Montage des Kraftfahrzeugmoduls, indem in einem ersten Schritt dieses in z-Richtung abgesenkt und in einem zweiten Schritt in x-Richtung verschoben wird. In einem optionalen dritten Schritt wird die formschlüssige Verbindung des Auslegers mit dem Sicherungsblock mithilfe eines zusätzlichen Befestigungsmittels in Gestalt einer Klammer gesichert.
Die DE 103 43 697 A1 beschreibt eine Haltevorrichtung, mit der ein kugelförmiger Ausgleichsbehälter an einer Karosserie eines Kraftfahrzeugs befestigt werden kann. Der Ausgleichsbehälter besitzt in seinem unteren Bereich einen Vorsprung, der in eine Öffnung der Haltevorrichtung eingreift. Seitlich besitzt die Haltevorrichtung mindestens einen Vorsprung, der in eine korrespondierende Öffnung des Ausgleichsbehälters eingreift. Ein Rastelement sichert den Ausgleichsbehälter in dessen oberem Bereich.
Ferner bezieht sich die DE 196 37 995 C1 auf eine Vorrichtung zur lösbaren Befestigung eines Behälters an einem Wandteil einer Fahrzeugkarosserie mittels einer hinterschneidenden Fixierung mit einer Zahnleiste, deren Rastzähne quer zur Einschieberichtung verlaufen.
Als nachteilig erweist sich bei diesem Stand der Technik die umständliche Montage bzw. Demontage, die zusätzlich zu der Fügerichtung immer auch eine weitere, von der Fügerichtung abweichende zusätzliche Bewegung, beispielsweise eine Verschiebung quer hierzu oder eine Schwenkbewegung erfordert, um den Behälter in der Montageposition zu sichern.
Vor diesem Hintergrund liegt der Erfindung daher die Aufgabe zugrunde, eine Anordnung und ein Verfahren zu schaffen, die eine wesentlich vereinfachte Montage bzw. Demontage gestatten.
Die erstgenannte Aufgabe wird gelöst mit einer Anordnung gemäß den Merkmalen des Patentanspruchs 1. Die Unteransprüche betreffen besonders zweckmäßige Weiterbildungen der Erfindung.
Erfindungsgemäß ist also eine Anordnung vorgesehen, bei welcher der Rastvorsprung eine der Haltestruktur abgewandte Aufnahme für ein Werkzeug sowie eine Rastnase aufweist und bei der die Aufnahme eine der Rastnase des Rastvorsprungs abgewandte Anlagefläche sowie eine zu dieser beabstandete Stützfläche für ein Hebelwerkzeug hat.
Hierdurch ist eine Zugänglichkeit zu der Rückseite der Haltestruktur entbehrlich, sodass aufgrund der guten Zugänglichkeit der Vorderseite der Haltestruktur die Demontage des Behälters wesentlich erleichtert wird. Indem das als Hebelwerkzeug ausgeführte Werkzeug in die Aufnahme eingesetzt wird und um eine von der Aufnahme abweichende Stützfläche verschwenkt wird, wird der Rastvorsprung in der gewünschten Weise elastisch verformt und die Hinterschneidung dadurch aufgehoben. Die Aufnahme ist dabei dem Rastvorsprung beispielsweise angeformt und durch eine Öffnung realisiert, in die das Werkzeug einsetzbar ist. Die Ausformung und der Rastvorsprung sind zu einem Formkörper einteilig bzw. einstückig verbunden und dadurch wird die Montage wesentlich erleichtert, weil hierzu lediglich die Positionierung des einheitlichen Formkörpers mit einer einzigen anschließenden Fügebewegung erforderlich ist. Im Gegensatz zum Stand der Technik entfällt die Positionierung der verschiedenen, die Rastverbindung bildenden Elemente in zueinander beabstandeten Positionen und der anschließenden komplexen Fügebewegung in mehreren Ebenen. Hierdurch werden zugleich Montagefehler vermieden und die Fertigungszeiten reduziert. Weiterhin wird eine einfache und schnelle visuelle Kontrolle der so erreichten Anordnung ermöglicht, sodass die Qualitätskontrolle vereinfacht wird.

Dabei erweist sich eine Ausgestaltung der vorliegenden Erfindung als besonders zweckmäßig, bei welcher die Ausformung in der Ausnehmung mit einem einzigen Freiheitsgrad beweglich ist und dadurch die Fügerichtung auf eine einachsige, translatorische Bewegung, vorzugsweise in Richtung der vertikalen Z-Achse, beschränkt werden kann. Hierdurch wird der Fügeprozess wesentlich vereinfacht, weil ausgehend von einer für den Monteur klar erkennbaren Startposition, in welcher die Ausformung in die Ausnehmung hineinreicht, der Behälter lediglich senkrecht nach unten verschoben werden muss, bis eine der Montageposition entsprechende Endposition erreicht ist. Durch eine geeignete Gestaltung oder Markierung kann zudem die Kontrolle der Montageposition erleichtert werden. Selbstverständlich beschränkt sich die Erfindung nicht auf eine vertikale Fügerichtung. Vielmehr haben sich auch bereits abweichende einachsige Fügerichtungen als vorteilhaft erwiesen, wenn die Montageposition unterhalb der Startposition liegt.

Hingegen ist es besonders praxisgerecht, wenn die Ausnehmung im Wesentlichen in einer vertikalen Ebene verläuft und die Ausformung einen oberen Randbereich der Ausnehmung umgreift, um so die Fügerichtung durch die Wirkrichtung der Schwerkraft in optimaler Weise zu unterstützen. Insbesondere bleibt der Behälter in der Praxis sogar dann in seiner Montageposition, wenn der Rastvorsprung außer Funktion, beispielsweise beschädigt ist. Die Betriebssicherheit kann dadurch weiter verbessert werden.

Eine unerwünschte seitliche Verlagerung oder Auslenkung kann wirkungsvoll beispielsweise durch eine formschlüssige Aufnahme der Ausformung oder des Rastvorsprungs in der jeweiligen Ausnehmung vermieden werden. Vorzugsweise weist die Ausnehmung seitliche Randbereiche als Führung für die Ausformung zur Vermeidung einer Bewegung quer zur Fügerichtung auf. Indem also die Ausnehmung nicht lediglich durch ein Profil oder eine Blechstruktur mit einer horizontal verlaufenden Kante gebildet ist, sondern als eine Durchbrechung, beispielsweise eine Öffnung, mit horizontalen und vertikalen, also seitlichen Randbereichen ausgeführt ist, wird eine seitliche Verlagerung ausgeschlossen. Zusätzliche seitliche Begrenzungselemente oder Anschläge sind daher nicht erforderlich.

Bei den aus dem Stand der Technik bekannten Anordnungen wird durch eine Abfolge verschiedener Fügerichtungen der Behälter gegenüber der Haltestruktur gegen eine unerwünschte Verlagerung gesichert. Die Demontage erfolgt in umgekehrter Reihenfolge, also entgegen der jeweiligen Fügerichtung. Demgegenüber blockiert gemäß einer besonders bevorzugten Ausführungsform der Rastvorsprung in der Montageposition eine Bewegung des Behälters relativ zu der Haltestruktur entgegen der Fügerichtung. Indem zur Demontage die Hinterschneidung des Rastvorsprungs aufgehoben werden muss, ist ein unbeabsichtigtes Lösen des Behälters nahezu ausgeschlossen. Zudem wird die sichere Positionierung des Behälters entgegen dem Stand der Technik nicht durch die Komplexität der Abfolge verschiedener Fügerichtungen erreicht, sondern es wird erfindungsgemäß eine Trennung der Fügebewegung einerseits und der Sicherung der Montageposition andererseits vorgenommen.

Der Rastvorsprung könnte manuell oder automatisiert in einer Ausnehmung gesichert werden. Weiterhin könnte die Haltestruktur einen elastisch verformbaren Bereich, beispielsweise eine federnde Zunge aufweisen, welche den Rastvorsprung in der Ausnehmung sichert und eine der Fügerichtung entgegengesetzte Bewegung verhindert. Besonders sinnvoll ist hingegen eine Ausgestaltung der Erfindung, bei welcher der Rastvorsprung entgegen einer elastischen Rückstellkraft verformbar ist und bei Erreichen der Montageposition die Haltestruktur hinterschneidet. Indem der Rastvorsprung zu Beginn des Montageprozesses elastisch verformt, insbesondere ausgelenkt wird und bei Erreichen der Montageposition selbsttätig unter dem Einfluss der elastischen Rückstellkraft in die Haltestruktur eingreift und dadurch verrastet, wird die Fixierung der Montageposition ohne einen zusätzlichen Arbeitsschritt für den Monteur kontrollierbar erreicht.

Die Ausnehmung in der Haltestruktur könnte bei einer einfachen Variante durch einen bloßen, vorspringenden Materialstreifen realisiert werden, welcher von der Ausformung von oben und von dem Rastvorsprung von unten umgriffen ist. Besonders sinnvoll ist hingegen eine Abwandlung der vorliegenden Erfindung, bei welcher der Rastvorsprung in einer zweiten Ausnehmung der Haltestruktur festlegbar ist. Hierdurch wird in besonders einfacher Weise eine unerwünschte Verlagerung oder Auslenkung des Behälters vermieden, indem jede Ausnehmung der Haltestruktur die Ausformung einerseits und den Rastvorsprung andererseits seitlich einschließt bzw. formschlüssig aufnimmt.

Der Rastvorsprung dient im Wesentlichen der Blockierung der Fügebewegung und ist daher vorzugsweise in einer Querebene zu der Fügerichtung beweglich. Besonders sinnvoll ist hingegen auch eine Ausgestaltung der vorliegenden Erfindung, bei der die Ausformung und der Rastvorsprung in der Montageposition einander gegenüberliegend gegen eine dem Behälter abgewandte Rückseite der Haltestruktur in derselben Ebene anliegen. Indem die Ausformung und der Rastvorsprung von entgegengesetzten Seiten dieselbe Fläche hinterschneiden, wird nicht nur eine Zentrierung erreicht, sondern die aufgrund der Hinterschneidung wirkenden Kräfte heben sich gegenseitig auf. Zudem wird der Behälter dadurch in der gewünschten Montageposition nahezu spielfrei gehalten, wenn die jeweiligen, die Haltestruktur hinterschneidenden Bereiche der Ausformung und des Rastvorsprungs einander zugewandt sind.

Der Behälter ist durch die Ausformung einerseits und den Rastvorsprung andererseits bereits zuverlässig und unbeweglich fixiert. Darüber hinaus hat es sich jedoch bereits als besonders praxisgerecht erwiesen, wenn der Behälter mit zumindest einem zu der Ausformung horizontal und/oder vertikal beabstandeten Führungszapfen ausgestattet ist, der in der Montageposition in eine Aufnahme eingreift und somit der Stabilisierung und der zusätzlichen Lastaufnahme dient. Je nach Gestaltung kann der Führungszapfen einen Großteil der auf den Behälter wirkenden Gewichtskräfte und dynamischen Kräfte aufnehmen, um so die Ausformung vor einer Überlastung zu schützen. Vorzugsweise ist der Führungszapfen mit seiner Haupterstreckung parallel zu der Fügerichtung angeordnet.

Der Rastvorsprung könnte beispielsweise mittels Verschieben eines Schiebers, welcher entlang der dem Behälter abgewandten Rückseite der Haltestruktur gegen den hinterschneidenden Bereich des Rastvorsprungs anliegt, aus der hinterschneidenden Position gelöst werden. In dieser Position kann der Behälter entgegen der Fügerichtung bewegt werden.

Beispielsweise wird die Ausformung relativ zu der Ausnehmung entlang einer einachsigen Fügerichtung bewegt, bis der Rastvorsprung einen Randbereich der Haltestruktur hinterschneidet und dadurch eine Bewegung entgegen der Fügerichtung blockiert. Hierdurch wird der Fügevorgang wesentlich erleichtert, weil nicht etwa mehrere Bewegungen nacheinander ausgeführt werden müssen, um den Behälter in der Montageposition zu sichern.

Vielmehr beschränkt sich der Fügevorgang auf eine translatorische Bewegung entlang einer einzigen Achse, die durch eine selbsttätige Verrastung des Rastvorsprungs in der Haltestruktur abgeschlossen wird.

Dabei erweist es sich als besonders zweckmäßig, wenn der Rastvorsprung aufgrund der Fügebewegung der Ausformung entgegen einer elastischen Rückstellkraft verformt wird und bei Erreichen der Montageposition in die Startposition zurückkehrt und die Haltestruktur hinterschneidet. Hierdurch entfällt ein zusätzlicher Verfahrensschritt zur Realisierung der Hinterschneidung des Rastvorsprungs, indem dieser zunächst durch das Einführen der Ausformung in die Ausnehmung elastisch verformt wird und schließlich selbsttätig in der Montageposition in die korrespondierende Durchbrechung eingreift.

Zum Lösen der Verbindung erweist es sich als besonders praxisgerecht, wenn der Rastvorsprung mittels eines Werkzeugs elastisch verformt wird, indem dieses mit einer der Haltestruktur abgewandten Aufnahme des Rastvorsprungs verbunden und das Werkzeug um eine Stützfläche herum verschwenkt wird, sodass die elastische Verformung durch das Werkzeug von einer Vorderseite aus durchgeführt werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Ansicht einer Haltestruktur und eines daran anzuordnenden Behälters;
- Fig. 2: eine perspektivische Ansicht des an der Haltestruktur fixierten Behälters;
- Fig. 3: eine Draufsicht auf die Haltestruktur und den daran fixierten Behälter;
- Fig. 4: eine geschnittene Seitenansicht des an der Haltestruktur fixierten Behälters;
- Fig. 5: eine vergrößerte Detaildarstellung gemäß Figur 4 und
- Fig. 6 - 8: weitere perspektivische Detailansichten des Behälters.

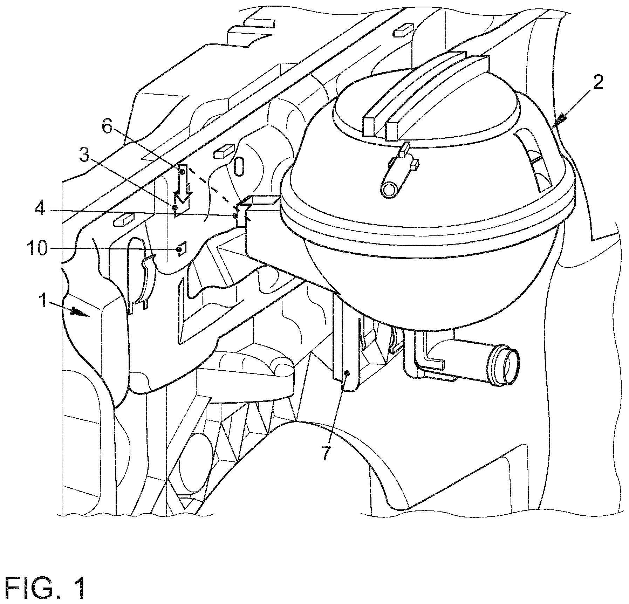

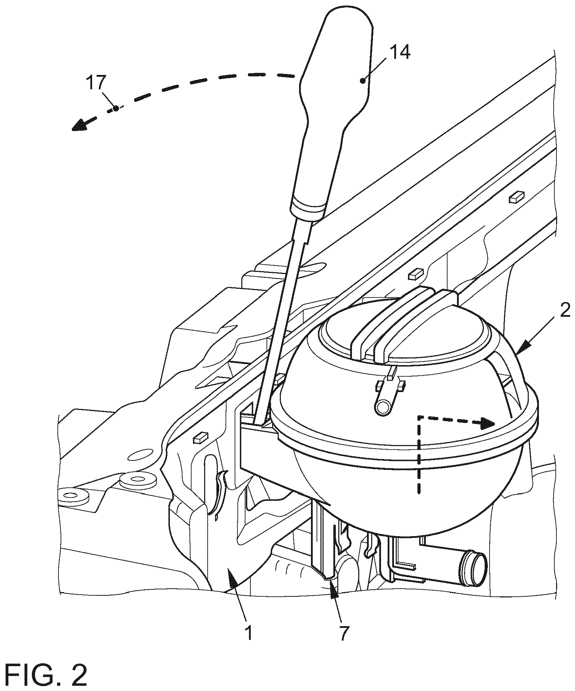

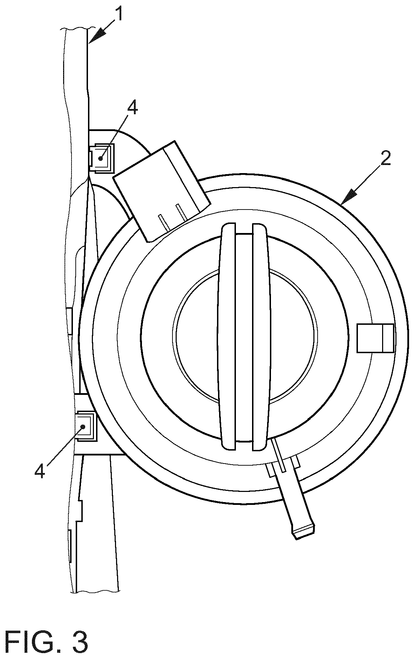

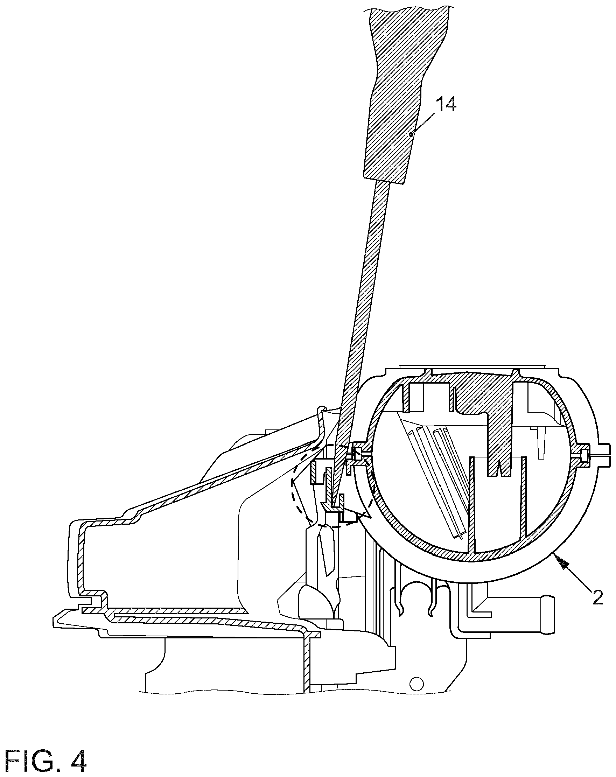

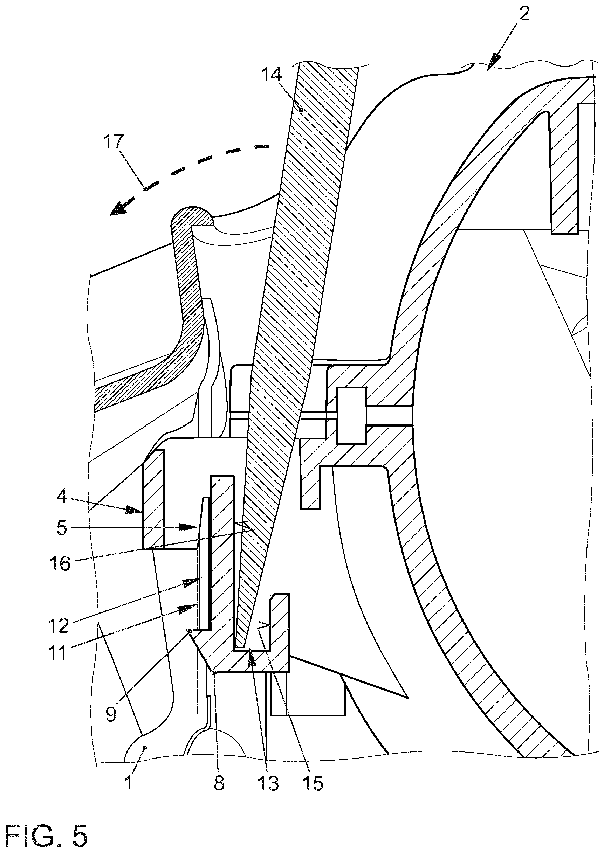

In Figur 1 ist ein zur Anordnung an einer als Blechformteil ausgeführten Haltestruktur 1 vorgesehener Behälter 2 in einer perspektivischen Darstellung zu erkennen. Zur Fixierung des Behälters 2 in einer Ausnehmung 3 der Haltestruktur 1 hat der Behälter 2 eine seitlich vorspringende Ausformung 4, die in der in den Figuren 4 und 5 erkennbaren Montageposition durch die Ausnehmung 3 hindurchgreift und einen oberen Randbereich 5 der Ausnehmung 3 hinterschneidet. Hierzu wird der Behälter 2 mit seiner Ausformung 4 entlang einer vertikalen Fügeachse in Fügerichtung 6 translatorisch abgesenkt bzw. eingeschoben, bis die in Figur 2 gezeigte, vorbestimmte Montageposition erreicht ist. Obwohl der Behälter 2 auch bereits durch eine einzige, in die Ausnehmung 3 eingreifende Ausformung 4 zuverlässig fixiert ist, verbessern zwei zueinander beabstandete Ausformungen 4, die nach demselben Funktionsprinzip fixierbar sind, jedoch hingegen keine übereinstimmenden Abmessungen aufweisen müssen, die übertragbaren Haltekräfte, wie dies insbesondere aus Figur 3 ersichtlich ist. Ferner ist am Behälter 2 ein Führungszapfen 7 angeordnet.

In der Montageposition werden, wie in den Figuren 4 und 5 näher dargestellt, die Haltekräfte im Wesentlichen durch die beiden Ausformungen 4 in ihrer jeweiligen Ausnehmung 3 in der Haltestruktur 1, die zugleich eine seitliche Führung für die jeweilige Ausformung 4 bildet, zur Vermeidung einer Bewegung quer zur Fügerichtung und ergänzend um Haltekräfte aufzunehmen ist, in Figur 2 ein Führungszapfen 7 angeordnet, der in eine Führungszapfenaufnahme 18 eingesteckt und gehalten wird. Auch könnte der Führungszapfen 7 auf die Führungszapfenaufnahme 18 aufgelegt werden und somit abstützend Haltekräfte aufnehmen. Ein mit der Ausformung 4 einteilig verbundener Rastvorsprung 8 dient der Festlegung und damit der Sicherung des Behälters 2 in dieser Montageposition. Hierzu wird eine Rastnase 9 des Rastvorsprungs 8 bei der Montage entgegen einer elastischen Rückstellkraft ausgelenkt, sodass diese bei Erreichen der Montageposition selbsttätig in eine weitere, in Figur 1 dargestellte Ausnehmung 10 in der Haltestruktur 1 eingreift und einen Randbereich 11 der Haltestruktur 1 hinterschneidet, um so eine unerwünschte Bewegung des Behälters 2 relativ zu der Haltestruktur 1 entgegen der Fügerichtung 6 zu blockieren.

Die Ausformung 4 und der Rastvorsprung 8 liegen in der Montageposition gegen eine dem Behälter 2 abgewandte rückseitige Fläche 12 der Haltestruktur 1 in derselben Ebene an. Zum Lösen des Rastvorsprungs 8 durch eine erneute elastische Verformung hat der Rastvorsprung 8 eine taschenförmige Aufnahme 13 für ein lediglich andeutungsweise dargestelltes Werkzeug 14 zur Übertragung einer Hebelkraft. Indem das Werkzeug 14 in der Aufnahme 13 gegen eine der Rastnase 9 abgewandte Anlagefläche 15 der Aufnahme 13 und zugleich gegen eine zu dieser vertikal beabstandeten Stützfläche 16 angelegt und in Pfeilrichtung 17 verschwenkt wird, wird die Rastnase 9 von dem Randbereich 11 getrennt und die Fixierung des Behälters 2 aufgehoben. Der Behälter 2 kann dann problemlos entgegen der Fügerichtung 6 bewegt und von der Haltestruktur 1 getrennt werden.

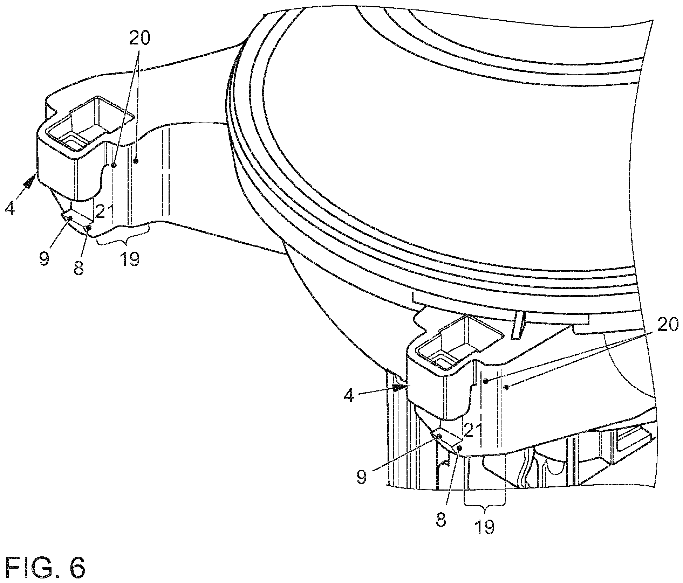

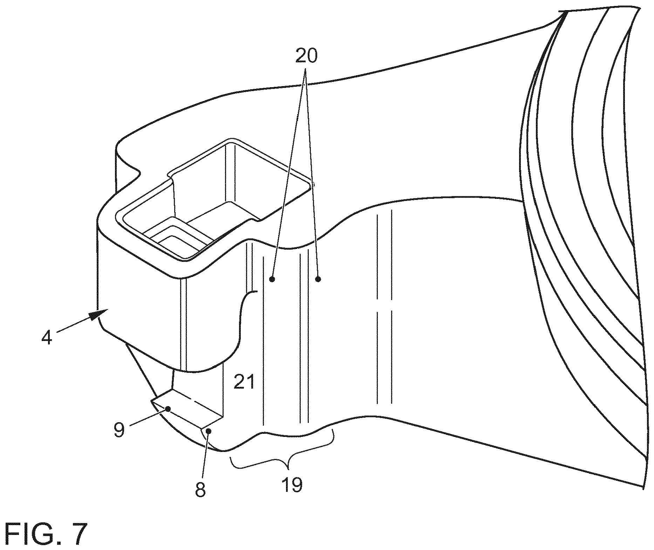

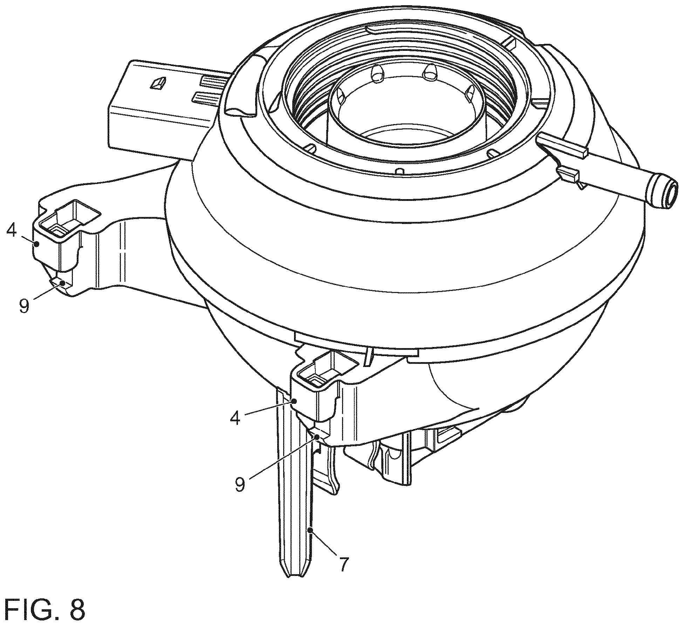

Fig. 6 bis 8 zeigen weitere perspektivische Detailansichten des Behälters 2, in der die Ausformung 4, der Rastvorsprung 8, die Rastnase 9 und der Führungszapfen 7 dargestellt sind. Ferner ist aufgezeigt ein elastischer Bereich 19 der mit dem Werkzeug 14, hier nicht dargestellt, verformt werden kann um die Rastnase 9 nach hinten zu bewegen. Der elastische Bereich 19 kann durch die Materialwahl und/oder eine Stufenstruktur 20 unterstützend elastisch ausgebildet werden. Auch ist es möglich einen Bereich 21 durch die Materialwahl elastisch auszubilden, damit mit dem Werkzeug 14, hier nicht dargestellt, die Rastnase 9 bewegt wird. Auch kann bei gleichem Material durch die Dicke des Materials, eine Elastizität des Bereiches 19 und/oder des Bereichs 21 hergestellt werden. Der Rastzapfen 7 ist sternförmig ausgebildet. Die Sternform bietet bei geringem Materialaufwand einen hohe Tragfähigkeit und sicheren Halt.

### Bezugszeichenliste

- 1: Haltestruktur
- 2: Behälter
- 3: Ausnehmung
- 4: Ausformung
- 5: Randbereich

- 6: Fügerichtung
- 7: Führungszapfen
- 8: Rastvorsprung
- 9: Rastnase
- 10: Ausnehmung

- 11: Randbereich
- 12: Fläche
- 13: Aufnahme
- 14: Werkzeug
- 15: Anlagefläche

- 16: Stützfläche
- 17: Pfeilrichtung
- 18: Führungszapfenaufnahme
- 19: Bereich
- 20: Stufenstruktur
- 21: Bereich

## Patentansprüche

1. Anordnung eines insbesondere als Ausgleichsbehälter für Kühlwasser dienenden Behälters (2) an einer eine Ausnehmung (3, 10) aufweisenden Haltestruktur (1), wobei der Behälter (2) in einer Montageposition mit zumindest einer Ausformung (4) einen Randbereich (5) der Ausnehmung (3) durch eine translatorische Bewegung in Fügerichtung (6) hinterschneidend positioniert ist und mit zumindest einem Rastvorsprung (8) festgelegt ist, wobei die Ausformung (4) und der Rastvorsprung (8) einteilig verbunden sind, **dadurch gekennzeichnet, dass** der Rastvorsprung (8) eine der Haltestruktur (1) abgewandte Aufnahme (13) für ein Werkzeug (14) sowie eine Rastnase (9) aufweist und dass die Aufnahme (13) eine der Rastnase (9) des Rastvorsprungs (8) abgewandte Anlagefläche (15) sowie eine zu dieser beabstandete Stützfläche (16) für ein Hebelwerkzeug (14) hat.

2. Anordnung nach Anspruch 1, **dadurch gekennzeichnet, dass** die Ausformung (4) in der Ausnehmung (3) mit einem einzigen Freiheitsgrad beweglich ist.

3. Anordnung nach den Ansprüchen 1 oder 2, **dadurch gekennzeichnet, dass** die Ausnehmung (3) im Wesentlichen in einer vertikalen Ebene verläuft und dass die Ausformung (4) einen oberen Randbereich (5) der Ausnehmung (3) umgreift.

4. Anordnung nach zumindest einem der vorangehenden Ansprüche, **dadurch gekennzeichnet, dass** der Rastvorsprung (8) in der Montageposition eine Bewegung des Behälters (2) relativ zu der Haltestruktur (1) entgegen der Fügerichtung (6) blockiert.

5. Anordnung nach zumindest einem der vorangehenden Ansprüche, **dadurch gekennzeichnet, dass** der Rastvorsprung (8) entgegen einer elastischen Rückstellkraft verformbar ist und bei Erreichen der Montageposition die Haltestruktur (1) hinterschneidet.

6. Anordnung nach zumindest einem der vorangehenden Ansprüche, **dadurch gekennzeichnet, dass** die Ausformung (4) und der Rastvorsprung (8) in der Montageposition einander gegenüberliegend gegen eine dem Behälter (2) abgewandte Fläche (12) der Haltestruktur (1) in derselben Ebene anliegen.

7. Anordnung nach zumindest einem der vorangehenden Ansprüche, **dadurch gekennzeichnet, dass** die jeweiligen, die Haltestruktur (1) hinterschneidenden Bereiche der Ausformung (4) und des Rastvorsprungs (8) einander zugewandt sind.

## Claims

1. Arrangement of a container (2) which serves, in particular, as an equalizing container for cooling water on a holding structure (1) which has a recess (3, 10), the container (2) being positioned, in a mounted position, so as to undercut an edge region (5) of the recess (3) by way of at least one shaped-out formation (4) by way of a translational movement in the joining direction (6), and being fixed by way of at least one latching projection (8), the shaped-out formation (4) and the latching projection (8) being connected in one piece, **characterized in that** the latching projection (8) has a latching lug (9) and a receptacle (13) for a tool (14), which receptacle (13) faces away from the holding structure (1), and **in that** the receptacle (13) has a bearing face (15), which faces away from the latching lug (9) of the latching projection (8), and a supporting face (16) for a lever tool (14), which supporting face (16) is spaced away from the said bearing face (15).

2. Arrangement according to Claim 1, **characterized in that** the shaped-out formation (4) can be moved in the recess (3) with a single degree of freedom.

3. Arrangement according to Claim 1 or 2, **characterized in that** the recess (3) runs substantially in a vertical plane, and **in that** the shaped-out formation (4) engages around an upper edge region (5) of the recess (3).

4. Arrangement according to at least one of the preceding claims, **characterized in that**, in the mounted position, the latching projection (8) blocks a movement of the container (2) relative to the holding structure (1) counter to the joining direction (6).

5. Arrangement according to at least one of the preceding claims, **characterized in that** the latching projection (8) can be deformed counter to an elastic restoring force, and undercuts the holding structure (1) when the mounted position is reached.

6. Arrangement according to at least one of the preceding claims, **characterized in that**, in the mounted position, the shaped-out formation (4) and the latching projection (8) bear in the same plane, so as to lie opposite one another, against a surface (12) of the holding structure (1) which faces away from the container (2).

7. Arrangement according to at least one of the preceding claims, **characterized in that** the respective regions of the shaped-out formation (4) and of the latching projection (8) which undercut the holding structure (1) face one another.

## Revendications

1. Agencement d'un récipient (2) servant notamment de récipient de compensation pour de l'eau de refroidissement sur une structure de retenue (1) présentant un évidement (3, 10), le récipient (2) étant positionné dans une position de montage avec au moins une formation (4) qui s'engage par contre-dépouille dans une région de bord (5) de l'évidement (3) par un déplacement en translation dans la direction d'assemblage (6), et étant fixé avec au moins une saillie d'encliquetage (8), la formation (4) et la saillie d'encliquetage (8) étant reliées d'une seule pièce, **caractérisé en ce que** la saillie d'encliquetage (8) présente un logement (13) opposé à la structure de retenue (1) pour un outil (14) ainsi qu'un ergot d'encliquetage (9) et **en ce que** le logement (13) présente une surface d'appui (15) opposée à l'ergot d'encliquetage (9) de la saillie d'encliquetage (8) ainsi qu'une surface de support (16) espacée de celle-ci pour un outil de levier (14).

2. Agencement selon la revendication 1, **caractérisé en ce que** la formation (4) peut être déplacée dans l'évidement (3) avec un seul degré de liberté.

3. Agencement selon les revendications 1 ou 2, **caractérisé en ce que** l'évidement (3) s'étend essentiellement dans un plan vertical et **en ce que** la formation (4) vient en prise autour d'une région de bord supérieure (5) de l'évidement (3).

4. Agencement selon au moins l'une quelconque des revendications précédentes, **caractérisé en ce que** la saillie d'encliquetage (8), dans la position de montage, bloque un déplacement du récipient (2) par rapport à la structure de retenue (1) à l'encontre de la direction d'assemblage (6).

5. Agencement selon au moins l'une quelconque des revendications précédentes, **caractérisé en ce que** la saillie d'encliquetage (8) peut être déformée à l'encontre d'une force de rappel élastique et s'engage par contre-dépouille dans la structure de retenue (1) une fois la position de montage atteinte.

6. Agencement selon au moins l'une quelconque des revendications précédentes, **caractérisé en ce que** la formation (4) et la saillie d'encliquetage (8) s'appliquent dans la position de montage en regard l'une de l'autre dans le même plan contre une surface (12) de la structure de retenue (1) opposée au récipient (2).

7. Agencement selon au moins l'une quelconque des revendications précédentes, **caractérisé en ce que** les régions respectives de la formation (4) et de la saillie d'encliquetage (8) s'engageant en contre-dépouille dans la structure de retenue (1) sont tournées l'une vers l'autre.
